# EUROPÄISCHE PATENTSCHRIFT

(11) **EP 0 674 199 B1**
(45) Veröffentlichungstag und Bekanntmachung des Hinweises auf die Patenterteilung: **12.12.2001**
(21) Anmeldenummer: 95103632.6
(22) Anmeldetag: 14.03.1995
(51) Int. Cl.: G02B 6/44

(54) **Spleissgehäuse**
Connector box
Boîte de connection

(30) Priorität: 26.03.1994 DE 4410531; 05.05.1994 DE 4415813
(43) Veröffentlichungstag der Anmeldung: 27.09.1995
(73) Patentinhaber: Felten & Guilleaume Kabelwerke GmbH, 51063 Köln (DE)
(72) Erfinder: Beck, Manfred, Dipl. Ing., D-51147 Köln (DE); Harjes, Bernd, Dipl. Ing., D-51467 Bergisch Gladbach (DE); Amerpohl, Uwe, Dipl. Ing., D-51467 Bergisch Gladbach (DE); Fietzke, Rudolf, Dipl. Phys., D-51465 Bergisch Gladbach (DE); Siegert, Wolfgang, D-58642 Iserlohn (DE)

(56) Entgegenhaltungen:
- EP-A- 0 213 365
- DE-A- 4 012 183
- DE-U- 9 115 060
- DE-U- 9 214 297
- PATENT ABSTRACTS OF JAPAN vol. 013, no. 203 (P-870), 15.Mai 1989 & JP-A-01 024208 (SUMITOMO ELECTRIC IND LTD), 26.Januar 1989,
- PATENT ABSTRACTS OF JAPAN vol. 009, no. 203 (P-381), 21.August 1985 & JP-A-60 066211 (NIPPON DENSHIN DENWA KOSHA), 16.April 1985,

## Beschreibung

Die Erfindung betrifft Spleißgehäuse nach dem Oberbegriff des Hauptanspruchs.

Ein Spleißgehäuse für Lichtwellenleiter als Garnitur in elektrischen Kabeln ist in der DE-4012183-A1 beschrieben. Es handelt sich um einen flachen und länglichen, einen Teil des Umfangs des Kabels umfassenden biegsamen Gehäusekörper, in dem die Spleiße und/oder Mehrlängen der Lichtwellenleiter untergebracht sind. Das Kabel ist die zylindrische Unterlage für das Spleißgehäuse. Der Gehäusekörper kann mit einer Abdeckplatte verschlossen werden. Die Auflagefläche und der Gehäuseboden liegen auf konzentrischen Zylinderflächen. Nach der Ablage der Lichtwellenleiter entweder in einer ovalen oder in einer 8-förmigen Lage liegen die Lichtwellenleiter auf einer räumlichen Fläche mit im wesentlichen zylindrischer Symmetrie.

Die Ablagefläche des bekannten Spleißgehäuses besteht aus einer einzigen zylindrisch ausgebildeten Auflagefläche. Daneben sind auch flache Spleißgehäuse bekannt. Von den Schmalseiten des Spleißgehäuses treten die Lichtwellenleiter in den Ablageraum ein. Die Lichtwellenleiter liegen in Schutzröhrchen, die im Ablageraum abgesetzt sind, so daß die freien Enden der Lichtwellenleiter für den Spleißvergang zugänglich sind. Da vornehmlich metallische Röhrchen eingesetzt werden, stellen die Enden dieser Röhrchen, auch wenn sie sorgfältig, glatt abgeschnitten sind, für die Lichtwellenleiter eine Gefährdungsstelle dar, weil Lichtwellenleiter und Röhrchenenden in derselben Auflagefläche liegen.

Der Erfindung liegt die Aufgabe zugrunde, ein Spleißgehäuse in zylindrischer Form anzugeben, das eine sichere Unterbringung der Lichtwellenleiter gewährleistet, wobei die abgelegten Lichtwellenleiter nicht mit den Enden der Lichtwellenleiter-Schutzröhrchen in Berührung kommen sollen.

Die Aufgabe wird von Spleißgehäusen gelöst, die in den Ansprüchen definiert sind.

Die Erfindung besteht darin, den Ablageraum für die Lichtwellenleiter in mindestens zwei Ablagebereiche oder Auflageflächen zu gliedern. Diese Ablagebereiche sollen in zueinander parallelen Ebenen liegen, sich in ihrem Abstand von der Zylinderachse des Gehäusekörpers unterscheiden.

Das Spleißgehäuse soll unabhängig davon einsetzbar sein, wie groß der Zylinderradius der Unterlage ist. Die Unterlage kann ein Nachrichten- oder ein Energiekabel oder eine Muffe eines dieser Kabel sein.

Der Ablagebereich für die Lichtwellenleiter kann - ausgehend von der Mittelachse des Ablageraums - zur Seite hin aus zwei oder mehreren Auflageflächen bestehen, die zur Seite hin abnehmenden Krümmungsradius haben.

Der Übergang zwischen den verschiedenen Ablagebereichen erfolgt kontinuierlich oder diskret. In einem Fall kann der Übergang gerundet und im anderen Fall scharfkantig oder sprunghaft sein.

Vorzugsweise können die Ablagebereiche aus einem mittleren und jeweils zwei außenliegenden Ablagebereiche bestehen. Es sind somit drei Flächenbereiche oder Flächenzonen vorhanden. Eine innere oder mittlere dient im wesentlichen dazu, die Lichtwellenleiter oder ihre Spleiße abzulegen. In einem oder beiden der äußeren Bereiche kommen die Schutzröhrchen zur Auflage, da sich die Ablagebereiche durch ihren jeweiligen Kümmungsradius oder in ihrem Abstand vor der Zylinderachse oder durch Parallellage unterscheiden. Lichtwellenleiter und Schutzröhrchen liegen somit in unterschiedlichen Ebenen, so daß sie sich nicht berühren. Die verschiedenen Ablagebereiche können sich parallel über die gesamte Länge der Auflagefläche oder des Ablageraums erstrecken.

Die Durchtrittsöffnungen für die Schutzröhrchen liegen fluchtend zu den zugeordneten Ablagebereichen.

Im Ablageraum kann ein Platz für einen Vorrat von Trocken- oder Entfeuchtungsmitteln vorhanden sein.

Die Abdeckplatte kann mit dem Spleißgehäuse verklebt werden. Dadurch entsteht eine dauerhafte Verbindung, die in der Regel nicht mehr reversibel geöffnet werden kann. Es wird daher vorzugsweise vorgeschlagen, umlaufend um den Rand des Ablageraums eine Rippe vorzusehen, auf die die Abdeckplatte linienförmig aufgelegt wird. Die Rippe kann auch lückenlos umlaufend sein und als Dichtung dienen. Eine besondere Klebung oder eine weitere Dichtung muß dann nicht vorgenommen werden. In dieser Ausführungsform ist das Gehäuse jederzeit demontierbar. Die Abdeckplatte kann aus Kunststoff ausgebildet sein. Falls das Gehäuse in einem Energiekabel eingesetzt werden und eine metallische Abdeckplatte Verwendung finden soll, sollte die Abdeckplatte mit dem Schirm des Kabels leitend verbunden werden.

Die Abdeckplatte kann mit einer Aufsetz- oder Führungshilfe versehen werden, die beim Aufsetzen mit im Ablageraum angeordneten Elementen zusammenwirkt. So läßt sich die Lage der Abdeckplatte genau fixieren.

Die im wesentlichen der Ablage der Lichtwellenleiter dienende Fläche im Ablageraum ist zylindrisch geformt. Da sich Lichtwellenleiter nicht ohne weiteres in eine zylindrisch gekrümmte Lage begeben, sind im Ablageraum Niederhalter als Begrenzer gegen das Hochwölben der Lichtwellenleiter aus ihrer Lage vorgesehen. Eine einfache Maßnahme ist, am Rand des Ablageraums eine Hinterschneidung der Ablageraumränder als Begrenzer vorzusehen. Dies entspricht schon dem Vorschlag nach der DE-4012183. Eine andere Maßnahme besteht darin, im Ablageraum Aufnahmeelemente vorzusehen, in die lose Niederhalter für die Lichtwellenleiter eingelegt werden.

Ein Spleißgehäuse, bei dem die Durchtrittsöffnungen für die Schutzröhrchen selbstschließend sind, läßt sich dann einfach realisieren, wenn das Gehäuse aus elastischem Material hergestellt wird. Dies entspricht ebenfalls schon einem Vorschlag nach der DE-4012183. Die Durchtrittsöffnungen können als Sackloch ausgebildet sein. Der vollständige Durchtritt eines Schutzröhrchen wird durch Durchstoßen einer nicht vorgebohrten Schichtdicke des Gehäusekörpers bewirkt.

Das Spleißgehäuse dient zur Auflage auf eine Zylinderfläche. Daher ist die Form des Bodens des Spleißgehäuse-Körpers dem Radius des Zylinders angepaßt. Zur Erzielung eines guten Sitzes wird vorgesehen, daß der Boden die zylindrische Unterlage nahezu vollständig umgreift. Je starrer das Spleißgehäuse bzw. je größer der Zylinder ausgebildet ist, umso schwieriger wird das Auflegen auf die Unterlage, weil der Boden des Gehäuses zum Überstülpen "geöffnet" werden muß. Es wird daher auch vorgeschlagen, den Boden des Spleißgehäuse-Körpers mehrteilig auszubilden. Der Vorteil liegt darin, daß das Spleißgehäuse für unterschiedlich große Zylinder der Unterlage einsetzbar ist und daß nur Formkörper hinzugenommen werden müssen, die sich als Zusatzelemente kostengünstig herstellen lassen.

Bei einer einfachen Ausführung können die den Boden bildenden Formkörper zur Zylinderachse symmetrisch ausgebildet sein. Vorzugsweise ist der Boden des Spleißgehäuses als zweiteiliger, zur Zylinderachse symmetrisch geformter Körper ausgebildet.

Der oder die Formkörper können etwa die Länge des Spleißgehäuses haben, von Vorteil ist, wenn sie sogar länger sind. Vorzugsweise werden die Formkörper so ausgebildet, daß ihre Enden für die Auflage der aus dem Spleißgehäuse austretenden, in Schutzröhrchen liegenden Lichtwellenleiter benutzt werden können. Diese können dann auf den Enden der Formkörper durch Klebeband fixiert werden.

Das Spleißgehäuse kann nicht nur für Nachrichtenkabel sondern auch für Energiekabel als Kabelmuffe verwendet werden.

Die Erfindung wird in den Figuren näher beschrieben. Es zeigen
- **Fig.** 1: eine Aufsicht auf ein Spleißgehäuse ohne Abdeckplatte,
- **Fig. 2**: eine Seitenansicht,
- **Fig. 3**: den Schnitt C durch das Spleißgehäuse,
- **Fig. 4**: den Schnitt B durch das Spleißgehäuse,
- **Fig. 5**: den Schnitt A durch das Spleißgehäuse,
- **Fig. 6**: eine Seitenansicht mit Formkörper und Abdeckplatte,
- **Fig. 7**: einen Schnitt mit durch das Spleißgehäuse mit zwei verschieden großen Formkörpern, und
- **Fig. 8**: den Rand eines Gehäuses mit Hinterschneidung.

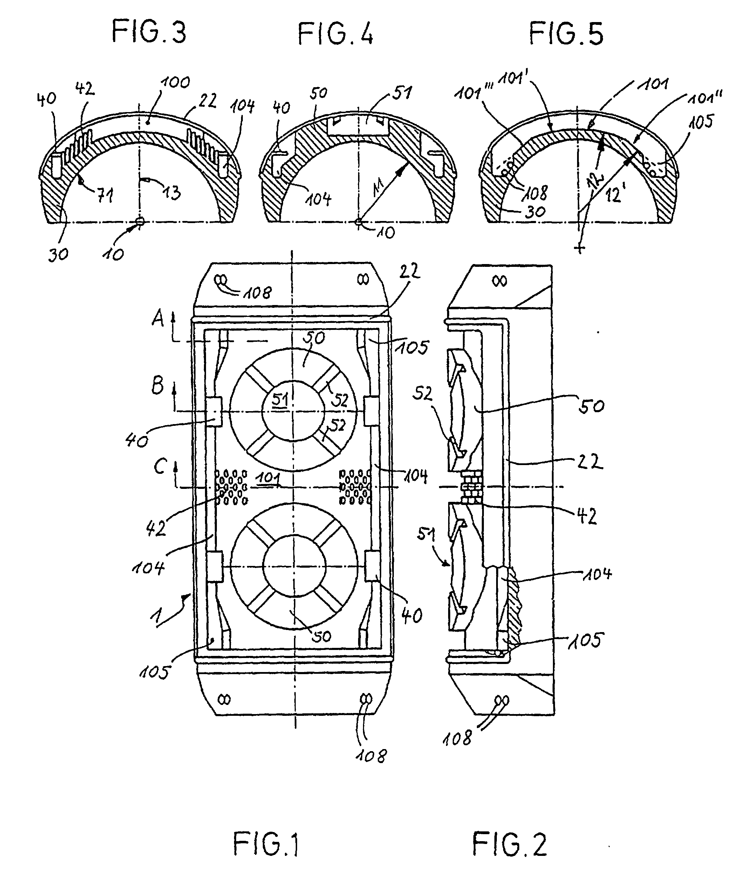

Die Fig. 1 zeigt eine Aufsicht und die Fig. 2 eine Seitenansicht auf ein Spleißgehäuse 1 bei entfernter Abdeckplatte 20. Die Auflagefläche 101 für die Lichtwellenleiter im Ablageraum 100 ist erfindungsgemäß in drei Ablagebereiche 101', 101", 101'" gegliedert und symmetrisch zur Achse 13 des Gehäuses ausgebildet. Der mittlere Ablagebereich 101' hat etwa zylindrische Krümmung mit einem Krümmungsradius 12, der in der Regel größer ist als der Radius 11 der Unterlage 70. Auf beiden Seiten des mittleren Ablagebereichs 101' erstreckt sich je ein Ablagebereich 101", 101' ", der, wegen des geringeren Krümmungsradius 12', steiler als die kontinuierliche Fortsetzung des mittleren Ablagebereichs 101' nach außen zum Rand des Gehäuses abfällt. Am Rand des Ablageraums 100 sind Niederhalter 40 vorhanden.

Die Lichtwellenleiter, ihre Überlängen und Spleiße liegen im wesentlichen auf dem mittleren Ablagebereich 101', da er die größte Fläche bildet. Die Tendenz der Lichtwellenleiter, sich nach oben in eine Ebene flachzulegen, wird durch die Niederhalter 40 behindert. In den seitlich neben dem Bereich 101' liegenden Ablagebereichen 101",101"',104 liegen die Lichtwellenleiter nicht oder kaum auf. In **Fig.** 1 und in einem zeichnerischen Ausbruch in **Fig.** 2 angedeutet, ist zu erkennen, daß der Raum 105 direkt hinter den Eintrittsöffnungen 108 auf einer bestimmten Länge breiter ist als der Ablagebereich 104. Der breiter ausgeführte Raum 105 kann etwa die Länge 1/10 bis 1/6 der Länge des Ablageraums 100 haben. Die auf der mittleren Auflagefläche 101' liegenden Lichtwellenleiter, die dort die Form eines Ovals oder die Form einer 8 bilden können, kommen praktisch nicht mit den aus den Eintrittsöffnungen 108 eintretenden Schutzröhrchen-Enden 60 in Kontakt.

In der Mitte des Ablageraums sind stiftförmige Klemmelemente 42 in mehreren Reihen vorhanden. Diese können aus elastischem Material und aufgeklebt sein. Zwischen diesen Klemmelementen 42 werden die Lichtwellenleiter und/oder ihre Spleiße fixiert.

Falls der Gehäusekörper 30 insgesamt aus elastischem Material hergestellt wird, können die Klemmelemente 42 und die seitlichen Niederhalter 40 einstückig mit dem Gehäusekörper ausgebildet werden.

Um den Rand des Ablageraums 100 ist eine vollständig umlaufende Rippe 22 vorhanden, auf die die Abdeckplatte 20 linienförmig und dichtend aufgelegt wird.

Im Ablagebereich 101 sind zwei kreisförmige Erhebungen 50 ausgebildet. Ihre gegen die Abdeckplatte gerichtete Oberseite hat etwa zylindrische Oberfläche. Die Erhebungen 50 haben eine mehrfache Funktion. Einerseits stabilisieren sie die Lage der um sie herumgelegten Lichtwellenleiter, zum anderen können sie in ihrer Mitte - in brunnenartige Vertiefungen 51 - ein Gefäß mit einem Vorrat von Trocken- oder Entfeuchtungsmittel und in den radialen Schlitzen 52 lose Niederhalter 41 aufnehmen. Da Lichtwellenleiter auf Feuchtigkeit reagieren, ist es sinnvoll, im Ablageraum ein Trockenmittel unterzubringen. Das Gefäß hierfür muß für den Gasaustausch eingerichtet und kann mit Silicagel gefüllt sein.

**Fig.** 3 bis 5 zeigen die in **Fig**. 1 markierten Schnitte C, B und A durch das Spleißgehäuse 1. In den Schnittzeichnungen sind der Zylinderradius 11 der Unterlage 70, der Mittelpunkt 10 des Zylinders der Unterlage, die Krümmungsradien 12,12' der Ablagebereiche 101',101",101"' und der tieferliegenden Bereich 104 zu erkennen. Mit Bezugszeichen 13 ist die Symmetrieachse des Gehäuses 1 bezeichnet.

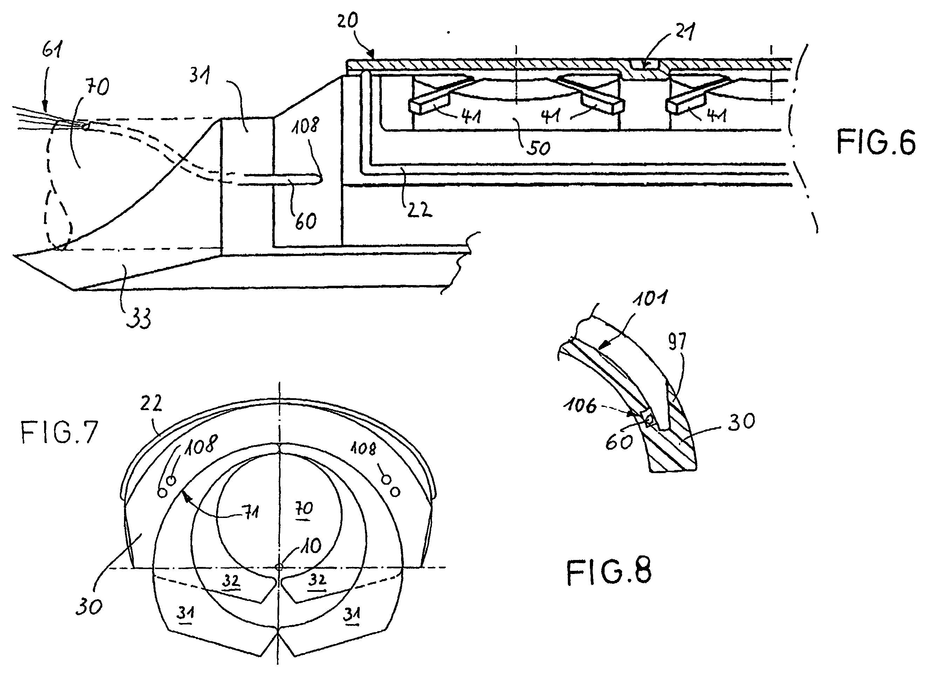

In der **Fig.** 6 wird eine - nur nach dem einen Ende vollständige - Seitenansicht mit Schnitt durch die Abdeckplatte 20 wiedergegeben.

Die Unterseite 71 des Körpers 30 des Spleißgehäuses ist dem Zylinderradius 11 der Unterlage angepaßt. Die Unterseite 30 des Gehäuses 1 oder ein untergelegter Formkörper 31 ist deutlich länger als das Spleißgehäuse selbst. Vorzugsweise wird die überstehende Unterseite 30 oder werden die Enden 33 des Formkörpers 31 für die Auflage und/oder Befestigung der aus dem Spleißgehäuse durch die Bohrungen 108 hindurchtretenden Schutzröhrchen 60 benutzt. Die das Spleißgehäuse überragenden Enden 33 der Unterseite 30 und/oder der Formkörper 31, 32 sind räumlich kompliziert geformt, da sie einerseits einen allmählichen Übergang auf die Unterlage (etwa die Abschirmung eines Kabels) erzeugen und als Auflage für die Lichtwellenleiter geeignet sein sollen. Wobei die Schutzröhrchen 60 möglichst ohne Knicken oder ohne Unterschreitung des kritischen Biegeradius auf der Unterlage (dem Kabel oder einer Kabelmuffe) weitergeführt werden müssen. Der Vollständigkeit halber wird noch erwähnt, daß die Schutzröhrchen 60 der Lichtwellenleiter (beispielsweise aus Edelstahl bestehend) bis in den Ablageraum geführt werden. Im Ablageraum werden die Schutzröhrchen mit einem Trennwerkzeug abgesetzt.

Die Abdeckplatte 20 hat in ihrer Mitte eine X-förmige Vertiefung 21, die den zur Mitte des Gehäuses weisenden Außenkonturen der beiden Erhebungen 50 angepaßt ist. Die Vertiefung 21 dient als Hilfe zum Führen beim Aufsetzen der Abdeckplatte. Die Lage der Abdeckplatte ist durch ihre gekrümmte Form - entsprechend der Rippe 22 - und durch die Führungshilfe 21 genau bestimmt.

In die Schlitze 52 sind lose, prismatische Niederhalter 41 aus einfachem Kunststoff eingelegt. Die Schlitze 52 haben zum Rand des Ablageraums hin eine Neigung, die gößer ist als die tangentiale Lage an den Zylinderumfang, so daß in den Ablagebereichen 101" und 101"' ein zusätzlicher Niederhalteeffekt bewirkt wird.

**Fig.** 1 bis 5 zeigen Ausbildungen des Bodens 30 des Spleißgehäuses, die den Zylinder der Unterlage nur halb umfassen (im Winkelmaß 180°). Eine einstückige Bodenform, die den Zylinder der Unterlage mehr als 180° umfaßt (siehe **Fig.** 7), ist dann möglich, wenn der Spleißgehäuse-Körper aus elastischem Material (beispielsweise aus Silikonkautschuk) hergestellt wird. Eine solche Ausführungsform ist besonders bei kleiner Spleißgehäusedimension sinnvoll. Je größer der Zylinderradius der Unterlage ist, umso eher wird eine Ausführungsform zu wählen sein, bei der der Körper 30 mehrteilig ausgebildet ist. Für sehr große Zylinder nähern sich Krümmungsradius 12 und Zylinderradius 11 einander, so daß das Gehäuse dann eher eine flache Form annimmt, ohne daß ein gesonderter Bodenkörper benötigt wird, da die Bodenform einstückig ausgebildet werden kann.

**Fig. 7** zeigt einen Schnitt durch das Spleißgehäuse, wobei der Boden mehrteilig und zwar aus zur Zylinderachse und zur Hochachse 13 symmetrischen Formkörpern 31,32 ausgebildet ist. Die Verwendung der Formkörpern hängt ab von der Größe des Zylinderradius 11. In der Figur sind je zwei symmetrische Formkörper 31 32 für je zwei Zylinderradien gezeichnet. Mit den Formkörpern läßt sich die Unterlage nahezu vollständig umgreifen.

Die Dimension der Formkörper kann in Schritten von 1 cm bezogen auf den Zylinderradius gewählt werden. Bei Unterlagen mit Durchmessern zwischen vorhandenen Größen der Formkörper wird zur Anpassung an den präzisen Sitz des Gehäuses auf der Unterlage eine Aufpolsterung mit Kunststoffband vorgenommen. Zur Befestigung des Gehäuses auf seiner Unterlage wird eine Bewicklung mit Schweißband vornehmlich über die Enden 33 und über dem Gehäuse ein Schrumpfschlauch vorgesehen.

Die **Fig.** 8 zeigt den Rand eines Gehäuses 30, bei dem weitere Einzelheiten weggelassen sind. Solche Einzelheiten können im Einzelnen der Beschreibung der anderen Ausführungsformen der Erfindung entnommen werden.

Mindestens ein weiterer Ablagebereich 106 für Schutzröhrchen 60 oder für Lichtwellenleiter 61 ist neben der Ablagefläche 101 angeordnet. Diese anderen Ablagebereiche 106 liegen unterhalb der von der Auflagefläche 101 aufgespannten Ebene und der Ablagebereich 106 ist für die Positionierung der Enden der Schutzröhrchen 60 vorgesehen. Die beiden Ablagebereiche 101 und 106 liegen also in zueinander parallelen Ebenen. Der Innenrand des Ablageraums ist mit einer Hinterschneidung 97 versehen, der der Niederhaltung der Lichtwellenleiter dient.

## Patentansprüche

1. Spleißgehäuse für Lichtwellenleiter
- mit einem Gehäuse bestehend aus einer Abdeckplatte (20) und einem Bodenteit (30), der einen Teil eines Zylindermantels beschreibt und damit eine gekrümmte Auflagefläche (101) für Spleiße und/oder Überlängen der Lichtwellenleiter (61) bildet, wobei Bodenteil (30) und Deckel einen Raum (100) derart begrenzen, daß der Raum (100) parallel zum Boden ausgebildet ist, wobei auf dem Boden (30) eine Auflagefläche für Lichtwellenleiter (61) vorgesehen ist, die Mittel für die Unterbringung von Spleißen und/oder Überlängen aufweist,
- sowie im Bodenteil (30) parallel zu einer Längskante des Ablageraums (100) liegenden Durchtrittsöffnungen (108) für in Schutzröhrchen (60) untergebrachte Lichtwellenleiter(61),
**dadurch gekennzeichnet,**
**daß** die Auflagefläche (101) für die Lichtwellenleiter (61) in mindestens einen ersten (101') und einen zweiten nebeneinander, parallel zu einer Langskante des Ablageraums (100) liegenden Bereich (101", 101'") gegliedert ist, wobei der Krümmungsradius (12) des ersten Bereichs (101') größer ist als der Krümmungsradius (12') des zweiten Bereichs (101",101'") und daß von diesen Bereichen der zentral angeordnete erste Bereich (101') im wesentlichen die Mittel für die Unterbringung von Spleißen und/oder Überlängen aufweist.
und **daß** die Breite der Bereiche (101",101' ") der Auflagefläche (101) und das Verhältnis der beiden Krümmungsradien (12,12') so gewählt ist, daß die Lichtwellenleiter (61) und die Schutzröhrchen (60) in unterschiedlichen Ebenen liegen.

2. Spleißgehäuse nach Anspruch 1, **dadurch gekennzeichnet, daß** mindestens ein weiterer Bereich (**104, 106**) vorhanden ist, der seitlich an den zweiten Bereich (**101**", **101**'") angrenzt und eine gegenüber dem zweiten Bereich (**101"**,**101**"') vertiefte Bodenfläche im wesentlichen für die Positionierung der Enden der Schutzröhrchen (**60**) aufweist.

3. Spleißgehäuse nach Anspruch 2, **dadurch gekennzeichnet, daß** dem ersten zentralen Bereich (**101**') zwei zweite Bereiche (**101**",**101**"') benachbart sind, an die je ein weiterer Bereich **(104,106)** mit vertiefter Bodenfläche angrenzt.

4. Spleißgehäuse nach einem der vorhergehenden Ansprüche, **dadurch gekennzeichnet, daß** sich jeder Bereich **(100', 101",101'",104,106)** über die gesamte Länge des Ablageraums **(100)** erstreckt.

5. Spleißgehäuse nach einem der Ansprüche 2 bis 4, **dadurch gekennzeichnet, daß** mindestens ein weiterer Bereich **(104,106)** mit vertiefter Bodenfläche an mindestens einem seiner Enden eine Verbreiterung (**105**) hat, die mit einer Durchtrittsöffnung **(108)** für die Schutzröhrchen **(60)** fluchtet.

6. Spleißgehäuse nach einem der vorhergehenden Ansprüche, **dadurch gekennzeichnet, daß** im Ablageraum (**100**) ein Platz **(51)** für die Unterbringung eines Vorrats von Trocken- oder Entfeuchtungsmittel vorhanden ist.

7. Spleißgehäuse nach einem der vorhergehenden Ansprüche, **dadurch gekennzeichnet, daß** im Ablageraum **(100)** Niederhalter **(40,41)** als Begrenzer gegen Hochwölben der Lichtwellenleiter (**61**) aus ihrer Lage vorgesehen sind.

8. Spleißgehäuse nach einem der vorhergehenden Ansprüche, **dadurch gekennzeichnet, daß** die Längskanten des Ablageraums **(100)** mit Hinterschneidung (**97**) als Begrenzer gegen Hochwölben der Lichtwellenleiter **(61)** aus ihrer Lage vorgesehen sind.

9. Spleißgehäuse nach einem der Ansprüche 7 oder 8, **dadurch gekennzeichnet, daß** Aufnahmeelemente (**52**) im Ablageraum **(100)** vorhanden sind, in die lose Niederhalter **(41)** für die Lichtwellenleiter **(61)** einlegbar sind.

10. Spleißgehäuse nach einem der vorhergehenden Ansprüche, **dadurch gekennzeichnet, daß** die Durchtrittsöffnungen **(108)** für die Schutzröhrchen **(60)** selbstschließend sind.

11. Spleißgehäuse nach einem der vorhergehenden Ansprüche, **dadurch gekennzeichnet, daß** das Spleißgehäuse **(1)** als Kabelmuffe für ein Energiekabel (**70**) verwendet wird.

## Claims

1. A splice box for optical fibres
- comprising a box consisting of a cover plate (20) and a base part (30) which describes part of a cylinder surface and thus forms a curved mounting surface (101) for splices and/or excess lengths of the optical fibres (61), wherein the base part (30) and the cover define a space (100) in such a way that the space (100) is parallel to the base, a mounting surface for optical fibres (61) being provided on the base (30) which has means for accommodating splices and/or excess lengths,
- and also passage openings (108) located in the base part (30) parallel to a longitudinal edge of the depositing space (100) for optical fibres (61) accommodated in protective tubes (60),
**characterised**
**in that** the mounting surface (101) for the optical fibres (61) is subdivided into at least a first (101') and a second region (101", 101'") located adjacent to one another, parallel to a longitudinal edge of the depositing space (100), the radius of curvature (12) of the first region (101') being greater than the radius of curvature (12') of the second region (101", 101"'), and in that of these regions the centrally arranged first region (101') essentially has the means for accommodating splices and/or excess lengths,
and **in that** the width of the regions (101", 101'") of the mounting surface (101) and the relationship of the two radii of curvature (12, 12') is selected such that the optical fibres (61) and the protective tubes (60) lie in different planes.

2. A splice box according to claim 1, **characterised in that** at least one further region (104, 106) is provided which is laterally adjacent to the second region (101", 101"') and has a base surface which is recessed compared with the second region (101", 101'") essentially for positioning the ends of the protective tubes (60).

3. A splice box according to claim 2, **characterised in that** adjacent to the first central region (101') are two second regions (101", 101'"), each of which is adjoined by a further region (104, 106) with a recessed base surface.

4. A splice box according to one of the preceding claims, **characterised in that** each region (100' [sic, recte 101'], 101", 101'", 104, 106) extends over the whole length of the depositing space (100).

5. A splice box according to one of claims 2 to 4, **characterised in that** at least one further region (104, 106) with recessed base surface has at least at one of its ends a widening (105) which is aligned with a passage opening (108) for the protective tubes (60).

6. A splice box according to one of the preceding claims, **characterised in that** a place (51) is provided in the depositing space (100) for accommodating a supply of drying agent or desiccant.

7. A splice box according to one of the preceding claims, **characterised in that** hold-down devices (40, 41) are provided in the depositing space (100) as limiting devices to counter the arching of the optical fibres (61) upwardly from their position.

8. A splice box according to one of the preceding claims, **characterised in that** the longitudinal edges of the depositing space (100) are provided with an undercut (97) as limiting device to counter the arching of the optical fibres (61) upwardly from their position.

9. A splice box according to one of claims 7 or 8, **characterised in that** receiving elements (52) are provided in the depositing space (100) into which loose hold-down devices (41) for the optical fibres (61) may be fitted.

10. A splice box according to one of the preceding claims, **characterised in that** the passage openings (108) for the protective tubes (60) are self-closing.

11. A splice box according to one of the preceding claims, **characterised in that** the splice box (1) is used as a cable junction box for a power cable (70).

## Revendications

1. Boîte de connexion pour guides d'ondes lumineuses
- avec une boîte constituée d'une plaque de recouvrement (20) et une partie de fond (30), qui décrit une partie d'une enveloppe de cylindre et forme de ce fait une surface d'appui (101) courbe pour des épissures et / ou des surlongueurs des guides d'ondes lumineuses (61), la partie de fond (30) et le couvercle limitant un espace (100) de telle manière que l'espace (100) est conformé en parallèle avec le fond, une surface d'appui qui présente des moyens pour le logement d'épissures et / ou de surlongueurs étant prévue pour les guides d'ondes lumineuses sur le fond (30),
- ainsi que dans la partie du fond (30), des orifices de passage (108) situés parallèlement à un bord longitudinal de l'espace de réception (100) pour les guides d'ondes lumineuses (61) logés dans les petits tubes (60) de protection,
**caractérisée en ce que** la surface d'appui (101) pour les guides d'ondes lumineuses (61) est répartie en au moins une première (101') et une deuxième région (101", 101"') se trouvant l'une à côté de l'autre, en parallèle avec une arête longitudinale de l'espace de réception (100), le rayon (12) de courbure de la première région (101') étant plus grand que le rayon (12') de la deuxième région (101", 101"'), et **en ce que** la première région (101') disposée au centre de ces régions présente essentiellement les moyens pour le logement d'épissures et / ou surlongueurs, et **en ce que** la largeur des régions (101", 101'") de la surface d'appui (101) et le rapport des deux rayons (12, 12') de courbure sont sélectionnés de manière telle que les guides d'ondes lumineuses (61) et les petits tubes (60) de protection se trouvent dans des plans différents.

2. Boîte de connexion selon la revendication 1, **caractérisée en ce qu'**il existe au moins une autre région (104, 106) qui est contiguë latéralement aux deux régions (101", 101"') et présente une surface de fond renfoncée par rapport à la deuxième région (101", 101"') essentiellement pour le positionnement des extrémités des petits tubes (60) de protection.

3. Boîte de connexion selon la revendication 2, **caractérisée en ce qu'**à la première région (101') centrale sont adjacentes deux deuxièmes régions (101", 101"') desquelles une autre région (104, 106) avec une surface de fond renfoncée est limitrophe.

4. Boîte de connexion selon une des revendications précédentes, **caractérisée en ce que** chaque région (100', 101", 101"', 104, 106) s'étend sur toute la longueur de l'espace de réception (100).

5. Boîte de connexion selon une des revendications 2 à 4, **caractérisée en ce qu'**au moins une autre région (104, 106) avec une surface de fond enfoncée a sur au moins une de ses extrémités un élargissement (105) qui est aligné sur un orifice de passage (108) pour les petits tubes (60) de protection.

6. Boîte de connexion selon une des revendications précédentes, **caractérisée en ce que** dans l'espace de réception (100), il y a une place (51) pour le logement d'une réserve de moyen de séchage ou d'humidification.

7. Boîte de connexion selon une des revendications précédentes, **caractérisée en ce que** dans l'espace de réception (100) des dispositifs de maintien (40, 41) vers le bas sont prévus pour limiter la courbure vers le haut des guides d'ondes lumineuses (61) et leur sortie de position.

8. Boîte de connexion selon une des revendications précédentes, **caractérisée en ce que** les côtés longitudinaux de l'espace de réception (100) sont pourvus d'une découpe vers l'arrière (97) pour limiter la courbure vers le haut des guides d'ondes lumineuses (61) et leur sortie de position.

9. Boîte de connexion selon la revendication 7 ou 8, **caractérisée en ce que** dans l'espace de réception (100), il est prévu des éléments de logement (52) dans lesquels des dispositifs amovibles de maintien (41) vers le bas peuvent être placés pour les guides d'ondes lumineuses (61).

10. Boîte de connexion selon une des revendications précédentes, **caractérisée en ce que** les orifices de passage (108) pour les petits tubes (60) de protection sont autoserrants.

11. Boîte de connexion selon une des revendications précédentes, **caractérisée en ce que** la boîte de connexion (1) est utilisée comme boîte de jonction de câble pour un câble (70) destiné à transporter l'énergie.
